# EUROPÄISCHE PATENTANMELDUNG

(11) **EP 1 849 344 A2**
(43) Veröffentlichungstag der Anmeldung: **31.10.2007**
(21) Anmeldenummer: 07008074.2
(22) Anmeldetag: 20.04.2007
(51) Int. Cl.: A01C 17/00, A01C 15/00

(54) **Vorrichtung zum Streuen körniger Stoffe**

(30) Priorität: 26.04.2006 DE 102006019477
(71) Anmelder: Amazonen-Werke H. Dreyer GmbH & Co. KG, 49205 Hasbergen (DE)
(72) Erfinder: Dreyer, Heinz, Dr.Dr. h.c., Dipl.-Ing., 49205 Hasbergen (DE); Walter, Achim, 49078 Osnabrück (DE)

(57) **Zusammenfassung**

Vorrichtung zum Streuen körniger Stoffe, insbesondere Düngemittel, die einen lasttragenden Rahmen (1), einen vom Rahmen (1) getragenen trichterförmigen Vorratsbehälter (2) sowie sich an dem Vorratsbehälter (2) anschließenden, Dosierorgane (5) aufweisenden und am Rahmen (1) angeordneten Auslauftrichtern (3). Um eine in einfacher Weise auf dem Rahmen (1) einer vorbeschriebenen Vorrichtung zu befestigenden Vorratsbehälter (2) zu schaffen, wird vorgeschlagen, die Auslauftrichter (3) mit dem zugeordneten Dosierorgan (5) unabhängig vom Vorratsbehälter (2) am Rahmen (1) zu befestigen.

## Beschreibung

Die Erfindung betrifft eine Vorrichtung zum Streuen körniger Stoffe, insbesondere Düngemittel die einen lasttragenden Rahmen, einen vom Rahmen getragenen trichterförmigen Vorratsbehälter sowie sich an dem Vorratsbehälter anschließenden, Dosierorgane aufweisenden und am Rahmen angeordnete Trichter aufweist.

Ein derartiger Schleuderstreuer ist beispielsweise durch die DE 198 18 065 A1 bekannt. Bei diesem Schleuderdüngerstreuer sind an dem Rahmen der Vorratsbehälter mit dem Auslauftrichter und dem Dosierorgan sowie unterhalb der Dosierorgane die von dem Dosierorgan dosierten Materialien verteilenden Verteileinrichtung angeordnet. Die Auslauftrichter sind an dem Vorratsbehälter angeordnet. Hierzu ist zwischen dem Rahmen und dem unteren Bereich des Vorratsbehälters und des Auslauftrichters eine Abstützung angeordnet. Ein weiterer Schleuderdüngerstreuer ist beispielsweise durch die EP 0 053 419 bekannt. Dieser Schleuderdüngerstreuer weist einen Rahmen auf, an dem der Vorratsbehälter mit dem die Auslauftrichter aufweisenden Dosierorgane und die Verteileinrichtung angeordnet ist. Zur Aufhängung der Verteileinrichtung ist, losgelöst vom unteren Bereich des Rahmens, eine Aufhängevorrichtung angeordnet, welche die Verteileinrichtung trägt.

Der Erfindung liegt die Aufgabe zugrunde, einen in einfacher Weise auf dem Rahmen einer vorbeschriebenen Vorrichtung zu befestigenden Vorratsbehälter zu schaffen.

Diese Aufgabe wird erfindungsgemäß dadurch gelöst, dass die Auslauftrichter mit dem zugeordneten Dosierorgan unabhängig vom Vorratsbehälter am Rahmen befestigt sind. Infolge dieser Maßnahme können die Auslauftrichter mit den zugeordneten Dosierorganen genau ausgerichtet zu den Verteilorganen am Rahmen angeordnet werden. Der Vorratsbehälter lässt sich dann unabhängig von dem Auslauftrichter am Rahmen oder dem Auslauftrichter selbst befestigen. Hierdurch wird eine unabhängige Anordnung des Vorratsbehälters von den Auslauftrichtern und den Dosierorganen zur Schaffung einer Vorrichtung zum Streuen körniger Stoffe geschaffen.

Eine weitere Lösung der Aufgabe wird dadurch erreicht, dass der Rahmen und die Auslauftrichter aus Metall und der Vorratsbehälter aus Kunststoff besteht. Hierdurch ergibt sich eine vorteilhafte Ausgestaltung des Streuers.

Um den Vorratsbehälter in sicherer lasttragender Weise am Rahmen der Maschine befestigen zu können, ist vorgesehen, dass der Vorratsbehälter einen mit dem Auflagebereich des Rahmens zusammenwirkenden Abstützbereich aufweist, das der Abstützbereich des Vorratsbehälters auf dem Auflagebereich des Rahmens aufliegt. Hierdurch stützt sich der Vorratsbehälter in sicherer Weise auf dem Rahmen ab. Es wird somit ein großes Fassungsvermögen des Vorratsbehälters in sicherer lasttragender Weise erreicht. Um in einfacher Weise ein verlustfreies Übergeben des sich im Vorratsbehälter befindlichen Materials zu den Dosierorganen über die Auslauftrichter zu erreichen, ist vorgesehen, dass die unteren Enden des Vorratsbehälters in die Auslauftrichter überlappend einmündend angeordnet sind. Hierdurch wird weiterhin sichergestellt, dass durch unterschiedliche Last in dem Vorratsbehälter sich der Vorratsbehälter zu den Auslauftrichtern und dem Dosierorgan bewegen kann, ohne dass eine Relativbewegung zwischen Dosierorgan und Verteilorgan stattfindet.

Um sicher zu stellen, dass bei einer Relativbewegung zwischen Vorratsbehälter und Auslauftrichtern keine Relativbewegung zwischen Dosierorgan und Verteilorgan stattfindet, ist vorgesehen, dass die unteren Enden des Vorratsbehälters nicht mit den Auslauftrichtern verbunden sind.

Eine einfache Anordnung des Vorratsbehälters auf den Auslauftrichter lässt sich dadurch erreichen, dass die unteren Enden des Vorratsbehälters über eine Flanschverbindung mit den Auslauftrichtern verbunden sind.

Eine besonders vorteilhafte Ausgestaltung der Vorrichtung ergibt sich dadurch, dass der Rahmen und die Auslauftrichter aus Metall und der Vorratsbehälter aus Kunststoff bestehen. Infolge dieser Maßnahme ergibt sich die Möglichkeit für eine freie und einfache Ausgestaltung des Vorratsbehälters, hierdurch besteht die grundsätzliche Möglichkeit Auslauftrichter und Rahmen zueinander passend auszubilden und sie leicht montier- und demontierbar auszugestalten.

Eine vorteilhafte Aussteifung des Vorratsbehälters lässt sich dadurch erreichen, dass der Vorratsbehälter einen inneren trichterförmigen und die zu verteilenden Stoffe aufnehmenden und in die Auslauftrichter einmündenden Bereich und einen äußeren, teilweise den Rahmen verkleidenden und den Vorratsbehälter aussteifenden und verkleidenden Wandbereich aufweist. Hierdurch besteht die Möglichkeit, die Vorrichtung kompakt und verkleidet auszugestalten, so dass sich eine zweckmäßige Formgebung in einfacher Weise verwirklichen lässt.

In einfacher Weise lassen sich eine Warn- und Beleuchtungseinrichtung an der Vorrichtung dadurch anbringen, dass in dem äußeren, den Rahmen verkleidenden Wandbereich in integrierter Weise Warn- und Beleuchtungseinrichtungen angeordnet sind.

Eine vorteilhafte Ausgestaltung und Aussteifung des Vorratsbehälters lässt sich in einfacher Weise dadurch verwirklichen, dass der Vorratsbehälter jeweils mit seinen inneren und äußeren Wandbereichen zumindest in den seitlichen und den hinteren Bereichen im Längsschnitt einen nach unten offenen V- oder U-förmigen Querschnitt aufweist.

Eine sichere Auflagerung des Vorratsbehälters auf dem Rahmen lässt sich dadurch erreichen, dass der die inneren und die äußeren Wandbereiche verbindenden Wandteile des Vorratsbehälters als auf dem Rahmen aufliegende Flächen ausgebildet sind.

Eine sichere Funktionsweise der Dosierorgane und eine lange Lebensdauer der Auslauftrichter und der Dosierorgane lässt sich dadurch erreichen, dass zumindest die Auslauftrichter und die Dosierorgane aus nicht rostendem Material, wie nicht rostendem Stahl hergestellt sind.

Eine stabile Ausgestaltung des Rahmens und eine vorteilhafte Aufnahme des Vorratsbehälters lässt sich dadurch erreichen, dass der Rahmen eine in Fahrtrichtung der Vorrichtung verlaufende und den Vorratsbehälter in der Mitte abstützende Längstraverse aufweist, dass das dachförmige Mittelteil des Vorratsbehälters auf der Längstraverse aufliegt.

Aufgrund der Ausgestaltung des Vorratsbehälters aus Kunststoff und der Anordnung von verkleidenden Wänden an dem Vorratsbehälter lässt sich in einfacher Weise erreichen, dass in dem den äußeren, den Rahmen verkleidenden Wandbereichen in integrierter Weise leiterähnliche Aufstiegselemente angeordnet sind.

Aufgrund der Ausgestaltung des Vorratsbehälters aus Kunststoff und der Anordnung von den Vorratsbehälter verkleidenden Wänden, lässt sich in erfinderischer Weise in den den äußeren, den Rahmen verkleidenden Wandbereichen in integrierter Weise zumindest eine behälterliche Aufnahme zur Aufnahme von Zubehörteilen, Austauschteilen, etc. anordnen. Weiterhin lassen sich in vorteilhafter Weise in dem den äußeren den Rahmen verkleidenden Wandbreichen in integrierter Weise zumindest eine begehbare Plattform oder ein begehbares Element anordnen.

Auch kann in vorteilhafter Weise der äußere, den Rahmen verkleidende Wandbereich als die äußeren Umlaufbahnen der Verteilerelemente überragendes Schutzelement ausgebildet sein. Hierdurch ist es nicht erforderlich, noch separate Schutzelemente an der Vorrichtung anzubringen. Die Schutzelementen bildende Elemente können direkt in die Verkleidung integriert werden, bzw. kann die Verkleidung entsprechend so ausgebildet werden, dass sie als Schutzelement dient.

Auch können die den Rahmen verkleidenden Randbereiche in integrierter Weise auf der Vorderseite der Vorrichtung als Schmutzfänger dienende Wandelemente ausgebildet sein.

Auch können die zu den Beleuchtungseinrichtungen führenden Leitungen in integrierter Weise durch an den äußeren den Rahmen verkleidende Wandbereiche verlegt werden.

Weitere Einzelheiten der Erfindung sind den übrigen Unteransprüchen, der Beispielsbeschreibung und den Zeichnungen zu entnehmen. Hierbei zeigen
- Fig. 1: einen erfindungsgemäßen Schleuderstreuer in Seitenansicht und in Prinzipdarstellung,
- Fig. 2: den Schleuderdüngerstreuer in der Ansicht von hinten und in Prinzipdarstellung,
- Fig. 3: den Schleuderdüngerstreuer in der Ansicht III -III,
- Fig. 4: den Vorratsbehälter des Schleuderdüngerstreuers in Seitenansicht und in Prinzipdarstellung,
- Fig. 5: den Rahmen des Schleuderdüngerstreuers mit Auslauftrichter und Dosierorgan und Verteileinrichtung in Seitenansicht und in Prinzipdarstellung,
- Fig. 6: einen weiteren Schleuderdüngerstreuer in Seitenansicht und in Prinzipdarstellung,
- Fig. 7: den Schleuderstreuer gemäß Fig. 6 in der Ansicht von hinten und in Prinzipdarstellung,
- Fig. 8: einen weiteren Schleuderdüngerstreuer in Seitenansicht und in Prinzipdarstellung,
- Fig. 9: einen weiteren Schleuderdüngerstreuer in Seitenansicht und in Prinzipdarstellung und
- Fig. 10: einen weiteren Schleuderdüngerstreuer in Seitenansicht und in Prinzipdarstellung

Der Schleuderdüngerstreuer weist den Rahmen 1 und den Vorratsbehälter 2 mit den sich daran anschließenden Auslauftrichtern 3, deren unteren Enden 4 jeweils eine Dosiereinrichtung 5 zugeordnet ist, auf. Die Dosiereinrichtung 5 leitet das sich im Vorratsbehälter 2 befindliche Material in einstellbaren Mengen der unterhalb der Dosiereinrichtung 5 angeordneten und rotierend angetriebenen Verteileinrichtung 6, die als Schleuderscheibe 7 mit darauf angeordneten Wurfschaufeln 8 ausgebildet ist, zu.

Der Rahmen 1 weist einen vorderen Bereich 9 auf, an dem die Drei-Punkt-Kupplungselemente 10 zum Anbau an den Drei-Punkt-Kraftheber eines Ackerschleppers angeordnet sind. An der unteren Traverse 11 des Rahmens 1 ist die Verteileinrichtung 6 angeordnet. Der Rahmen 1 weist im oberen Bereich 12 einen umlaufenden Auflagebereich 13 auf. Der Auflagebereich 13 ist im Wesentlichen horizontal ausgerichtet. Die den horizontalen Auflagebereich 13 bildende Rahmenteile 14 sind zusätzlich über schräg verlaufende Streben 15 gegenüber dem vorderen Rahmenteil 9 abgestützt. Weiterhin weist der Rahmen 1 in seiner Mitte ein in Fahrtrichtung 16 des Schleuderstreuers verlaufende und den Vorratsbehälter 2 in der Mitte abstützende Längstraverse 17 auf. Hierdurch ist das dachförmige Mittelteil 18 des Vorratsbehälters 2 auf der Längstraverse 17 aufliegend abgestützt.
Weiterhin sind an dem Rahmen 1 Tragelemente 19 angeordnet, an die die Auslauftrichter 3 mit dem jeweils zugeordneten Dosierorgan 5 unabhängig vom Vorratsbehälter 2 am Rahmen 1 befestigt sind.

Der Vorratsbehälter 2 weist in seinem oberen Bereich 20 mit dem Auflagebereich 13 des Rahmens 1 zusammenwirkende Abstützbereiche 14 auf. Der Abstützbereich 14 des Vorratsbehälters 2 liegt auf dem Auflagebereich 13 des Rahmens 1 auf. Die unteren Enden 21 des Vorratsbehälters 2 münden in die Auslauftrichter 3 in überlappender Weise ein. Die unteren Enden 21 des Vorratsbehälters 2 sind nicht mit den Auslauftrichtern 3 verbunden. Hierdurch kann der Vorratsbehälter 2 sich relativ zu den Auslauftrichtern 3 bewegen.

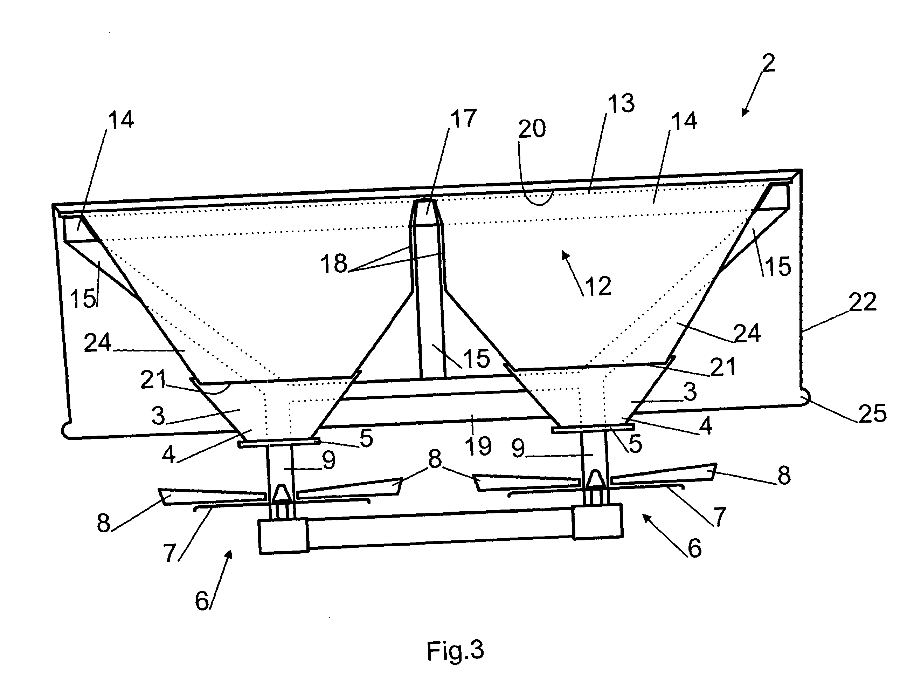

Der Vorratsbehälter 2 weist äußere den Vorratsbehälter 2 verkleidende Wandbereiche 22 auf. Somit besteht der Vorratsbehälter 2 aus einem inneren, trichterförmigen und die zu verteilenden Stoffe aufnehmenden und in die Auslauftrichter 3, die die Dosierorgane 5 tragen, einmündende Bereich 23 und einen äußeren, teilweise den Rahmen 1 verkleidenden und den Vorratsbehälter 2 aussteifenden und verkleidenden Wandbereiche 22 auf. Der äußere verkleidende Wandbereich 22 ist mit dem trichterförmigen Bereich 24 des Vorratsbehälters 2 einstückig ausgebildet und somit mit dem Vorratsbehälterbereich 24 verbunden. Der äußere verkleidende Wandbereich 22 und der Vorratsbehälterbereich 24 sind einstückig aus Kunststoff hergestellt, während die Auslauftrichter 3 und der Rahmen 1 aus Metall hergestellt sind. Der Vorratsbehälter 2 weist jeweils mit seinem inneren und äußeren Wandbereichen 22 zumindest in den seitlichen und dem unteren Bereich im Längsschnitt einen nach unten offene V- oder U-förmigen Querschnitt auf, wie insbesondere die Fig. 3 zeigt.

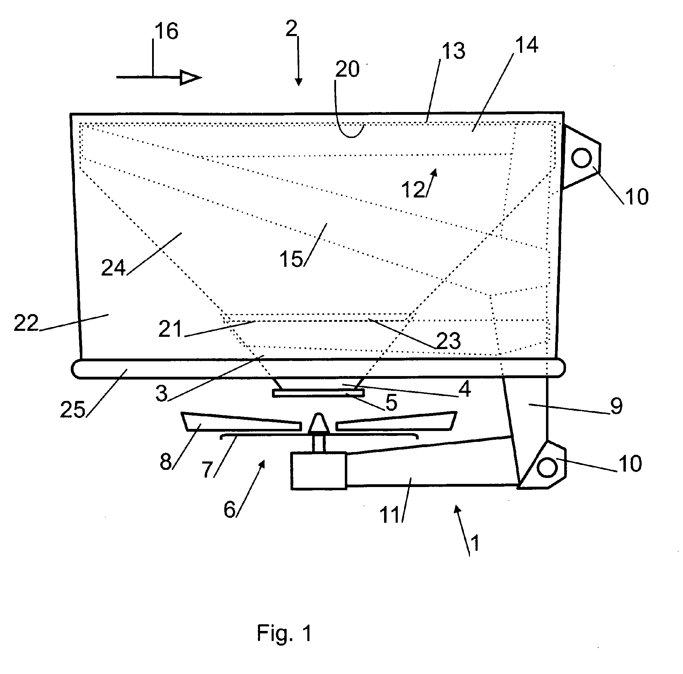

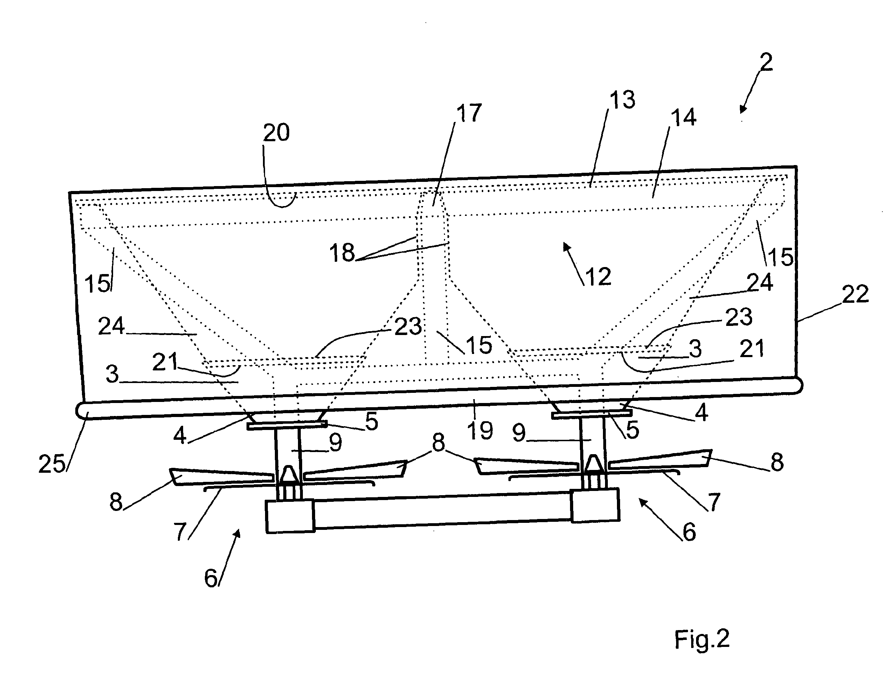

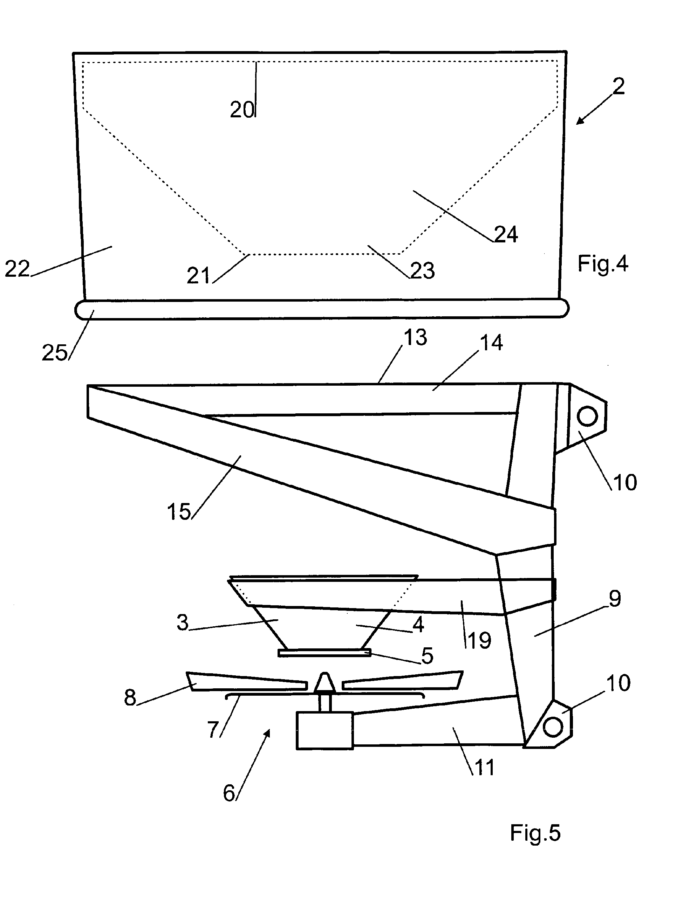

Wie die Fig. 1-5 zeigen bestehen der Rahmen 1 und der Vorratsbehälter 2 aus separaten Teilen, wobei der Vorratsbehälter 2 über den Rahmen 1 gemäß Fig. 5 gestülpt wird und so die unteren Enden 21 des trichterförmigen Bereiches 24 des Vorratsbehälters 2 in die am Rahmen 1 angeordneten Auslauftrichter 3 überlappend einmünden. Mit geeigneten Mitteln wird der Vorratsbehälter 2 an dem Rahmen 1 befestigt, dies kann beispielsweise mit nicht dargestellten Schrauben oder Clipsverbindungen oder anderen geeigneten Verbindungselementen geschehen.

Der äußere verkleidende Wandbereich 22 ist als die äußeren Umlaufbahnen der Verteilerelemente 8 überragendes Schutzelement 25 ausgebildet, wie die Fig. 1-3 zeigen. Somit erfüllt der den Vorratsbehälter 2 verkleidende Wandbereich 22 nicht nur seine Verkleidungsfunktion sondern auch eine Schutzfunktion, in dem quasi in den die verkleidenden Wandbereiche 22 bildenden Element das die Verteilerelemente 8 überragende Schutzelement 25 in integrierter Weise angeordnet ist.

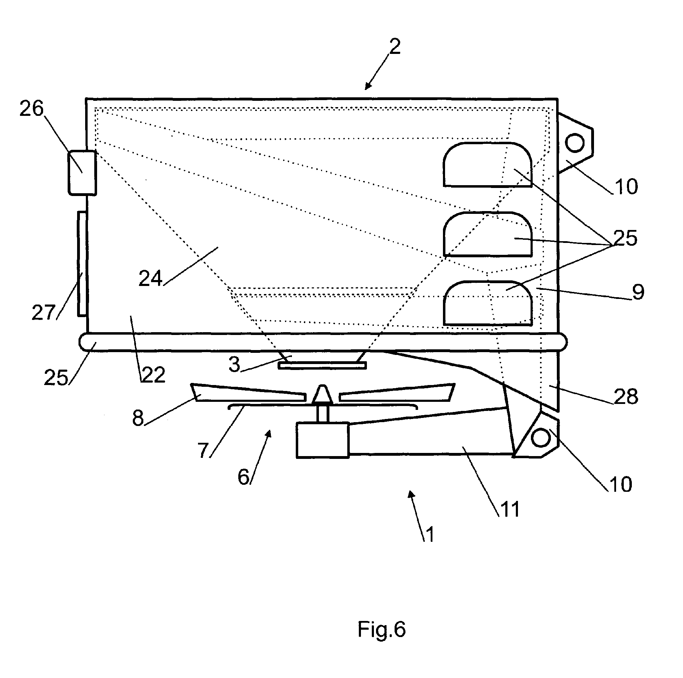

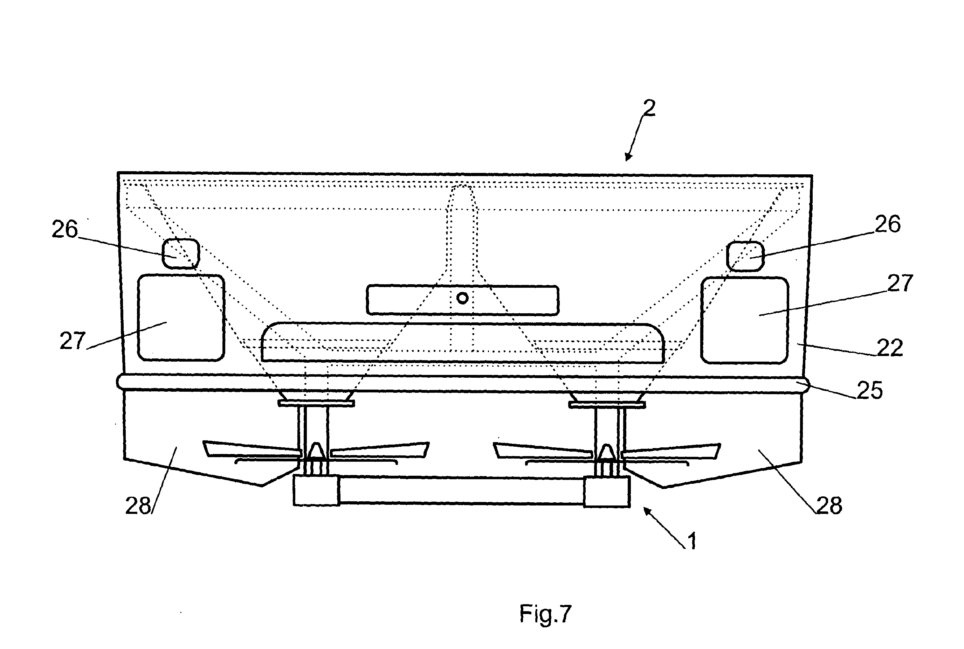

Der Schleuderdüngerstreuer gemäß den Fig. 6 und 7 unterscheidet sich von dem Schleuderdüngerstreuer gemäß den Fig. 1-5 dadurch, dass in dem den Vorratsbehälter 2 verkleidenden Wandelemente 22 in integrierter Weise auf der Seite leiterähnliche Aufstiegselemente 25 angeordnet sind. Des Weiteren sind auf der Rückseite in den, den Vorratsbehälter 2 verkleidenden Wandelementen 22 in integrierter Weise Beleuchtungseinrichtungen 26 und Warntafeln 27 angeordnet. Die zu den Beleuchtungseinrichtungen 26 führenden Leitungen sind in nicht dargestellter Weise in integrierter Weise an den äußeren verkleidenden Wandbereichen 22 in verdeckter Weise verlegt.

Weiterhin sind den den Rahmen 1 verkleidenden äußeren Wandbereichen 22 auf der Vorderseite des Schleuderdüngerstreuers in integrierter Weise als Schmutzfänger 28 dienende Wandelemente angeordnet.

Weiterhin können in nicht dargestellter Weise in den den äußeren, den Rahmen 1 verkleidenden Wandbereichen 22 in integrierter Weise zumindest eine behälterähnliche Aufnahme zur Aufnahme von Zubehörteilen, Austauschteilen, etc. angeordnet sein. Eine derartige behälterliche Aufnahme ist in nicht dargestellter Weise mit einer Abdeckung verschließbar. Weiterhin ist der Boden einer derartigen behälterähnlichen Aufnahme schräg nach innen abfallend angeordnet.

Weiterhin können in nicht dargestellter Weise in dem äußeren, den Rahmen 1 verkleidenden Wandbereichen 22 in integrierter Weise zumindest eine begehbare Plattform oder ein begehbares Element ähnlich den leiterähnlichen Aufstiegsöffnungen 25 angeordnet sein. Auch kann eine derartig begehbare Plattform die den Behälter 2 verkleidenden Elemente 22 nach außen überragen.

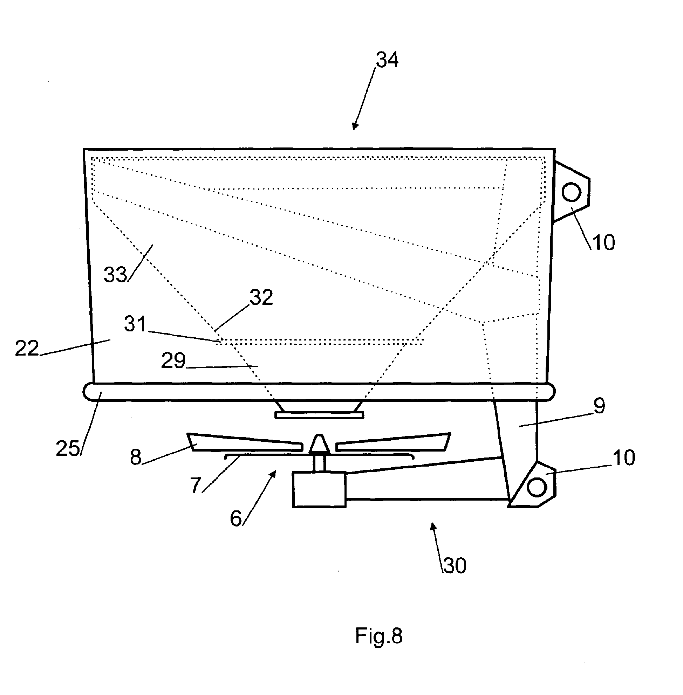

Der Schleuderdüngerstreuer gemäß Fig. 8 unterscheidet sich von dem Schleuderdüngerstreuer gemäß den Fig. 1- 7 dadurch, dass die Auslauftrichter 29 nicht als separate Elemente am Rahmen 30 angeordnet sind, sondern mittels Flanschelementen 31 an den unteren Enden 32 der trichterförmigen Bereiche 33 des Vorratsbehälters 34 angeflanscht sind. Hierbei bestehen auch wiederum die Teile des Vorratsbehälters 34 aus Kunststoff, während der Rahmen 30 und die Auslauftrichter 29 aus Metall bestehen.

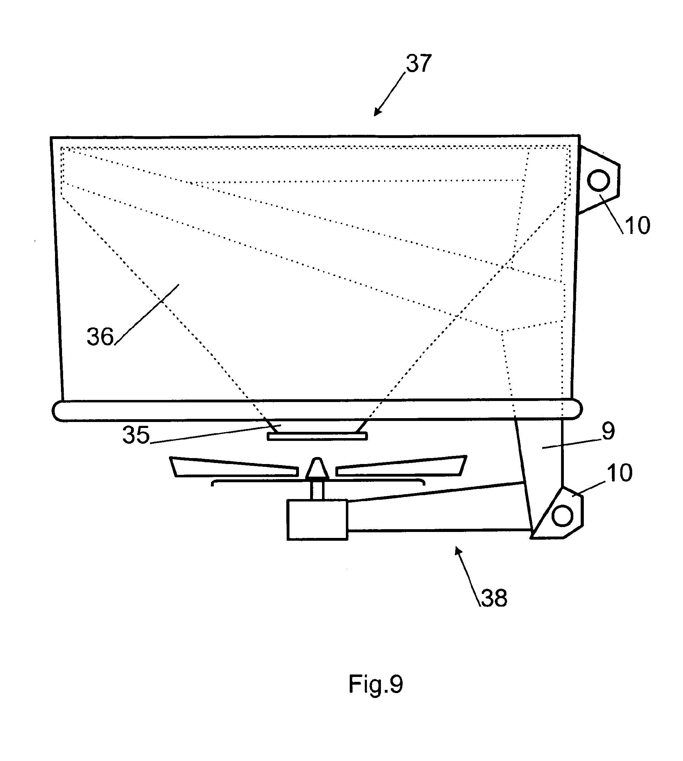

Der Schleuderdüngerstreuer gemäß Fig. 9 unterscheidet sich von dem Schleuderdüngerstreuer gemäß den Fig. 1-5 dadurch, dass die Auslauftrichter 35 in integrierter Weise Bestandteil der trichterförmigen Bereiche 36 des Vorratsbehälters 37 sind und mit diesem einstückig verbunden sind. In diesem Falle sind die Auslauftrichter 35 ebenso wie der Vorratsbehälter 37 aus Kunststoff hergestellt, während die Rahmenteile 38 aus Metall bestehen.

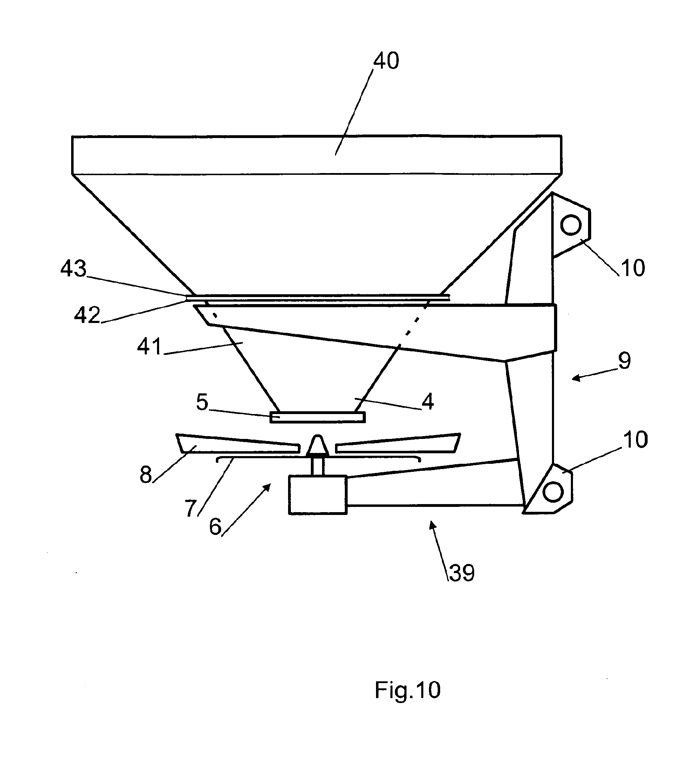

Der Schleuderdüngerstreuer gemäß Fig. 10 weist einen Rahmen 39 und den Vorratsbehälter 40 mit den sich daran anschließenden Auslauftrichtern 41, deren unteren Enden 4 jeweils eine Dosiereinrichtung 5 zugeordnet ist, auf. Die Dosiereinrichtung 5 leitet das sich im Vorratsbehälter befindliche Material in einstellbaren Mengen der unterhalb der Dosiereinrichtung 5 angeordneten und rotierend angetriebenen Verteileinrichtung 6, die als Schleuderscheibe 7 mit darauf angeordneten Wurfschaufeln 8 ausgebildet ist, zu.

Der Rahmen 39 weist einen vorderen Bereich 9 auf, an dem die Dreipunktkupplungselemente 10 zum Anbau an den Dreipunktkraftheber eines Schleppers angeordnet sind. Der Rahmen 39 weist nach hinten ragende Traversen auf, an denen die Auslauftrichter befestigt sind. Die Auslauftrichter weisen einen oberen Flansch auf, auf dem mittels ebenfalls eines Flansches der Vorratsbehälter befestigt ist. Der Rahmen und die Auslauftrichter bestehen aus Metall und der Vorratsbehälter ist aus Kunststoff hergestellt.

## Patentansprüche

1. Vorrichtung zum Streuen körniger Stoffe, insbesondere Düngemittel, die einen lasttragenden Rahmen, einen vom Rahmen getragenen trichterförmigen Vorratsbehälter sowie sich an dem Vorratsbehälter anschließenden, Dosierorgane aufweisenden und am Rahmen angeordneten Auslauftrichtern, **dadurch gekennzeichnet, dass** die Auslauftrichter (4) mit dem zugeordneten Dosierorgan (5) unabhängig vom Vorratsbehälter (2)am Rahmen (1) befestigt sind.

2. Vorrichtung zum Streuen körniger Stoffe, insbesondere Düngemittel die einen lasttragenden Rahmen getragenen trichterförmigen Vorratsbehälter sowie sich an dem Vorratsbehälter anschließenden, Dosierorgane aufweisenden und am Rahmen angeordneten Auslauftrichtern, wobei die Auslauftrichter mit dem zugeordneten Dosierorgan am Vorratsbehälter befestigt sind, **dadurch gekennzeichnet, dass** der Rahmen (39) und die Auslauftrichter (41) aus Metall und der Vorratsbehälter (40) aus Kunststoff bestehen.

3. Vorrichtung nach Anspruch 1 oder 2, **dadurch gekennzeichnet, dass** der Rahmen (1,39) einen umlaufenden Auflagebereich (13) aufweist, dass der Vorratsbehälter (2) einen mit dem Auflagebereich (13) des Rahmens (1,14) zusammenwirkenden Abstützbereich (20) aufweist, das der Abstützbereich (20) des Vorratsbehälters (2,24) auf dem Auflagebereich (13) des Rahmens (1,14) aufliegt.

4. Vorrichtung nach Anspruch 1 oder 2, **dadurch gekennzeichnet, dass** die unteren Enden (23) des Vorratsbehälters (2,24) in die Auslauftrichter (3) überlappend einmündend angeordnet sind.

5. Vorrichtung nach Anspruch 4, **dadurch gekennzeichnet, dass** die unteren Enden (23) des Vorratsbehälters (2,24) nicht mit den Auslauftrichtern (3) verbunden sind.

6. Vorrichtung nach Anspruch 1 oder 2, **dadurch gekennzeichnet, dass** die unteren Enden (32) des Vorratsbehälters (33,32,40) über eine Flanschverbindung (31) mit den Auslauftrichtern (29,41) verbunden sind.

7. Vorrichtung nach einem oder mehreren der vorstehenden Ansprüche, **dadurch gekennzeichnet, dass** der Rahmen (1,30.39) und die Auslauftrichter (3,29,41)aus Metall und der Vorratsbehälter (2,24,33,34,40) aus Kunststoff bestehen.

8. Vorrichtung nach einem oder mehreren der vorstehenden Ansprüche, **dadurch gekennzeichnet, dass** der Vorratsbehälter (2) einen inneren trichterförmigen und die zu verteilenden Stoffe aufnehmenden und in die Auslauftrichter (3) einmündenden Bereich (4) und einen äußeren, teilweise den Rahmen (1) verkleidenden und den Vorratsbehälter (2,24) aussteifenden und verkleidenden Wandbereich (22) aufweist.

9. Vorrichtung nach einem oder mehreren der vorstehenden Ansprüche, **dadurch gekennzeichnet, dass** in dem äußeren, den Rahmen (1,9,11) verkleidenden Wandbereich (22) in integrierter Weise Warn- und Beleuchtungseinrichtungen (26,27) angeordnet sind.

10. Vorrichtung nach einem oder mehreren der vorstehenden Ansprüche, **dadurch gekennzeichnet, dass** der Vorratsbehälter (2) jeweils mit seinen inneren (24) und äußeren Wandbereichen (22) zumindest in den seitlichen und den hinteren Bereichen im Längsschnitt eine nach unten offenen V- oder U-förmigen Querschnitt aufweist.

11. Vorrichtung nach einem oder mehreren der vorstehenden Ansprüche, **dadurch gekennzeichnet, dass** der die inneren (24) und die äußeren Wandbereiche (22) verbindenden Wandteile des Vorratsbehälters (2) als auf dem Rahmen (1,14) aufliegende Flächen (20) ausgebildet sind.

12. Vorrichtung nach Anspruch 11, **dadurch gekennzeichnet, dass** die auf dem Rahmen (1,14) aufliegende Fläche (20) horizontal ausgebildet ist.

13. Vorrichtung nach einem oder mehreren der vorstehenden Ansprüche, **dadurch gekennzeichnet, dass** zumindest die Auslauftrichter (3,41) und die Dosierorgane (5) aus nicht rostendem Material, wie nicht rostendem Stahl hergestellt sind.

14. Vorrichtung nach einem oder mehreren der vorstehenden Ansprüche, **dadurch gekennzeichnet, dass** der Rahmen (1) eine in Fahrtrichtung (16) der Vorrichtung verlaufende und den Vorratsbehälter (2,24) in der Mitte abstützende Längstraverse (17) aufweist, dass das dachförmige Mittelteil (18) des Vorratsbehälters (2,24) auf der Längstraverse (17) aufliegt.

15. Vorrichtung nach einem oder mehreren der vorstehenden Ansprüche, **dadurch gekennzeichnet, dass** die Auslauftrichter (3) jeweils über zumindest zwei parallel zu den Trichterwänden des Vorratsbehälters (2) verlaufende Streben (19) am Rahmen (1) aufgehängt sind.

16. Vorrichtung nach einem oder mehreren der vorstehenden Ansprüche, **dadurch gekennzeichnet, dass** in dem den äußeren, den Rahmen (1) verkleidenden Wandbereichen (22) in integrierter Weise leiterähnliche Aufstiegselemente (25) angeordnet sind.

17. Vorrichtung nach einem oder mehreren der vorstehenden Ansprüche, **dadurch gekennzeichnet, dass** in dem den äußeren, den Rahmen (1) verkleidenden Wandbereichen (22) in integrierter Weise zumindest eine behälterähnliche Aufnahme zur Aufnahme von Zubehörteilen, Austauschteilen etc. angeordnet ist.

18. Vorrichtung nach Anspruch 17, **dadurch gekennzeichnet, dass** die behälterähnliche Aufnahme mit einer Abdeckung verschließbar ist.

19. Vorrichtung nach Anspruch 17, **dadurch gekennzeichnet, dass** der Boden der behälterähnlichen Aufnahme schräg nach innenunten abfallend angeordnet ist.

20. Vorrichtung nach einem oder mehreren der vorstehenden Ansprüche, **dadurch gekennzeichnet, dass** in dem den äußeren, den Rahmen (1) verkleidenden Wandbereichen (22) in integrierter Weise zumindest eine begehbare Plattform oder begehbares Element angeordnet ist.

21. Vorrichtung nach einem oder mehreren der vorstehenden Ansprüche, **dadurch gekennzeichnet, dass** der äußere, den Rahmen (1) verkleidende Wandbereich (22) als die äußeren Umlaufbahnen der Verteilerelemente (6,7,8) überragendes Schutzelement (25) ausgebildet ist.

22. Vorrichtung nach einem oder mehreren der vorstehenden Ansprüche, **dadurch gekennzeichnet, dass** in dem den äußeren, den Rahmen (1) verkleidenden Wandbereichen (22) in integrierter Weise auf der Vorderseite der Vorrichtung als Schmutzfänger (28) dienende Wandelemente angeordnet sind.

23. Vorrichtung nach einem oder mehreren der vorstehenden Ansprüche, **dadurch gekennzeichnet, dass** die zu den Beleuchtungseinrichtungen (26) führenden Leitungen in integrierter Weise durch an den äußeren den Rahmen (1) verkleidenden Wandbereichen (22) verlegbar sind.
